# EUROPÄISCHE PATENTSCHRIFT

(11) **EP 3 234 405 B1**
(45) Veröffentlichungstag und Bekanntmachung des Hinweises auf die Patenterteilung: **12.06.2019**
(21) Anmeldenummer: 15781626.5
(22) Anmeldetag: 13.10.2015
(51) Int. Cl.: F16G 1/06, F16G 1/28, F16G 5/04, F16G 5/20

(54) **ANTRIEBSRIEMEN, INSBESONDERE ZAHNRIEMEN**
DRIVE BELT, IN PARTICULAR TOOTHED BELT
COURROIE D'ENTRAÎNEMENT, EN PARTICULIER COURROIE DENTÉE

(30) Priorität: 19.12.2014 DE 102014226535
(43) Veröffentlichungstag der Anmeldung: 25.10.2017
(73) Patentinhaber: ContiTech Antriebssysteme GmbH, 30165 Hannover (DE)
(72) Erfinder: WELL, Michael, 38159 Vechelde (DE); TEVES, Reinhard, 30926 Seelze (DE)
(74) Vertreter: Preusser, Andrea
(86) Internationale Anmeldenummer: PCT/EP2015/073665
(87) Internationale Veröffentlichungsnummer: WO 2016/096182

(56) Entgegenhaltungen:
- EP-A1- 1 035 353
- EP-A2- 0 422 630
- EP-A2- 2 405 155
- WO-A1-2005/080820

## Beschreibung

Die Erfindung betrifft einen Antriebsriemen mit einem elastischen Grundkörper, umfassend eine Decklage als Riemenrücken und einen Unterbau mit einer Kraftübertragungszone, wobei die Decklage und / oder der Unterbau aus wenigstens einer faserhaltigen Polymermischung besteht.

Antriebsriemen, die auch als Kraftübertragungsriemen bezeichnet werden und im Funktionszustand endlos geschlossen sind, können als Flachriemen, Keilriemen, Keilrippenriemen und Zahnriemen ausgebildet sein. Von besonderer Bedeutung ist hier der Zahnriemen.

Insbesondere für Zahnriemen ist die Produktion von faserhaltigen Polymermischungen für den Grundkörper nur mit sehr hohem Aufwand möglich. Für hervorragende Eigenschaften wir hohe Festigkeit, hohe Spannungswerte und hohe Weiterreißfestigkeiten ist eine optimale Faserverteilung mit anisotroper Ausrichtung notwendig. Werden hierfür Polymere mit hohem Molekulargewicht eingesetzt, wie bspw. aus WO00/29762, WO2005/080820 A1 oder WO2010/006831A1 für Polymermischungen mit reinem hochmolekularem HNBR offenbart, so weist der Riemen in der Regel eine verbesserte Haltbarkeit, insbesondere hinsichtlich Abriebeigenschaften und Festigkeit, auf. Derartige Polymer lassen sich allerdings nur sehr schwer für faserhaltige Polymermischungen verwenden, da die hohe Viskosität der Polymere eine gleichmäßige Faserverteilung verhindert. Des Weiteren zeigen die Rohmischungen eine sehr hohe Viskosität, so dass die Fließfähigkeit stark eingeschränkt ist und der Riemen, insbesondere der Zahnriemen, nicht vollständig ausformbar ist. Diese Mischungen weisen Ansammlungen, d.h. Agglomerate, von Fasern auf, die als Fremdkörper in der Mischung wirken und gleichmäßige physikalische Eigenschaften über den Gesamt-Riemen unmöglich machen. Zusätzlich wird die Faserausrichtung gestört, was zu verminderten Anisotropieeffekten führt.

Die Aufgabe der Erfindung besteht daher darin, einen gattungsgemäßen Antriebsriemen, insbesondere Zahnriemen, bereit zu stellen, der sich durch eine homogene Verteilung und optimale Ausrichtung der Fasern in Polymermischungen mit hochmolekularen Polymeren auszeichnet. Es sollen Antriebsriemen bereit gestellt werden, die insbesondere für Anwendungen unter Öleinfluß, eine verbesserte Festigkeit, eine verbesserte Weiterreißfestigkeit und sehr hohe Spannungswerte in Faserrichtung aufweisen. Des Weiteren soll die Fließfähigkeit im Herstellprozess des Antriebsriemens zur besseren Ausformung insbesondere der Zähne eines Zahnriemens optimiert werden.

Gelöst wird diese Aufgabe dadurch, dass die Decklage und / oder der Unterbau des Antriebsriemens mit einem elastischen Grundkörper aus wenigstens einer faserhaltigen Polymermischung besteht, wobei die Polymermischung wenigstens ein Copolymer aus Butadien und Acrylnitril mit einer Mooney-Viskosität [(ML 1+4), 100°C)] zwischen 10 und 50 enthält.

Überraschenderweise hat sich gezeigt, dass eine homogene Verteilung und optimale Ausrichtung der Fasern ohne weitere negative Beeinträchtigung der weiteren physikalischen Eigenschaften des Riemens dann möglich sind, wenn die Polymermischung wenigsten ein niedrigviskoses, d.h. mit einer Mooney-Viskosität [(ML 1+4), 100°C)] zwischen 10 und 50, Copolymer aus Butadien und Acrylnitril enthält.

Hierbei ist relevant, dass dieses niedrigviskose Copolymer aus Butadien und Acrylnitril nicht zusätzlich zu der faserhaltigen Polymermischung hinzugefügt wird, sondern einen Teil der Polymere mit höherem Molekulargewicht ersetzt.

Die faserhaltige Polymermischung enthält zudem zusätzlich wenigstens ein weiteres hochviskoses, d.h. mit einer Mooney-Viskosität [(ML 1+4), 100°C)] größer oder gleich 60, Copolymer aus Butadien und Acrylnitril.

In einer besonderen Ausführungsform besteht die faserhaltige Polymermischung ausschließlich aus dem hochviskosen Copolymer aus Butadien und Acrylnitril und dem niedrigviskosen Copolymer aus Butadien und Acrylnitril.

Besonders gute Ergebnisse lassen sich des Weiteren erzielen, wenn sich die beiden Copolymere aus Butadien und Acrylnitril lediglich in der Mooney-Viskosität unterscheiden, aber ansonsten dieselbe, d.h. identische, Mikrostruktur besitzen.

In einer weiteren bevorzugten Ausführungsform handelt es sich bei dem hochviskosen und dem niedrigviskosen Copolymer aus Butadien und Acrylnitril jeweils um einen teilhydrierten oder vollständig hydrierten Nitrilkautschuk (HNBR). Der Acrylnitrilghalt (ACN-Gehalt) beträgt insbesondere größer oder gleich 35 Gew.-%, bevorzugt größer oder gleich 39 Gew.-%.

Als Fasern für die faserhaltige Polymermischung können alle der fachkundigen Person bekannten Fasern eingesetzt werden. Die diesbezüglichen Werkstoffe können insbesondere hochmodulige Fasern, wie bspw. Polyamid (PA), Polyimid (PI), Aramid, insbesondere para-Aramid oder meta-Aramid, Polyvinylacetal (PVA), Polyetheretherketon (PEEK), Polyester, insbesondere Polyethylentherephthalat (PET) oder Polyethylen-2,6-naphthalat (PEN), Polysulfon (PSU), Polyoxadiazol (POD), Poly(p-phenylen-2,6-benzobisoxazol) (PBO), Polyphenylen oder Polyphenylenderivat, insbesondere Polyphenylensulfid (PPS), sein. Insbesondere hochmodulige Fasern eignen sich gut, da sie den höchsten Verstärkungseffekt (Spannungswerte / Festigkeiten) erzielen.
Die Fasern können rein oder in Mischform als Hybrid vorliegen.
Die Fasern können bevorzugt in Form von Kurzfasern oder als fibrillierte Fasern, d.h. als Pulpe, vorliegen. Fibrillierte Fasern haben durch erzeugte Fibrillen eine sehr hohe Faseroberflächen und bieten somit von sich aus eine gute Anbindung an das Polymer. Kurzfasern werden bevorzugt in Längen von 0,1 bis 10mm, besonders bevorzugt in Längen von 0,1 bis 8mm und ganz besonders bevorzugt in Längen von 0,5 bis 5mm verwendet. Die Kurzfasern ermöglichen eine besonders gute Ausrichtung der Fasern bei der Weiterverarbeitung der Polymermischung z-Bsp. beim Kalanderprozess.

Die Fasern können vor dem Einmischen in die Polymermischung zur besseren Anbindung gegebenenfalls noch mit einer Beschichtung aus RFL oder einem anderen geeigneten Haftvermittler versehen sein.
Die Fasermenge in der Gesamt-Polymermischung beträgt bevorzugt zwischen 1 und 20 phr, besonders bevorzugt zwischen 3 und 10 phr, ganz besonders bevorzugt zwischen 4 und 6 phr.
Die faserhaltige Polymermischung enthält in der Regel noch weitere Mischungsingredienzien. Die Mischungsingredienzien wiederum umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente).
Als Füllstoffe werden bevorzugt Ruß und / oder Kieselsäure eingesetzt. Die beiden genannten Füllstoffe können alleine oder in Kombination eingesetzt werden. Insbesondere wenn Kieselsäure als heller Füllstoff alleine eingesetzt wird, so lassen sich durch Zugabe geeigneter Pigmente je nach Kundenwunsch farbige oder teilfarbige, d.h. nur Decklage oder Riemenrücken, herstellen.

Besonders gute Ergebnisse lassen sich erzielen, wenn die Fasern, insbesondere die Kurzfasern, der faserhaltigen Polymermischung im Rahmen des Herstellverfahrens vor dem Einmischen in die Polymermischung mit wenigstens einem Copolymer aus Butadien und Acrylnitril mit einer Mooney-Viskosität [(ML 1+4), 100°C)] zwischen 10 und 50 zu einem Batch vermischt werden. Die Menge der Kurzfasern in dem Batch beträgt bevorzugt 10 bis 50 phr, besonders bevorzugt 10 bis 30 phr und ganz besonders bevorzugt 15 bis 15 phr.
Die Herstellung des Batches geschieht bevorzugt auf einer Walze oder einem Brecherwerk bei Raumtemperatur für bevorzugt 20 bis 45 Minuten.

Besonders gute Ergebnisse lassen sich ebenso erzielen, wenn die Fasern, insbesondere die Pulpe, der faserhaltigen Polymermischung im Rahmen des Herstellverfahrens vor dem Einmischen in die Polymermischung mit wenigstens einem Füllstoff, bevorzugt Ruß, zu einem Batch vermischt werden.

Die Erfindung soll nun anhand von Vergleichs- und Ausführungsbeispielen, die in den Tabelle 1, 2 und 3 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. In Tabelle 1 ist dabei die Mischungszusammensetzung dargestellt, Tabelle 2 zeigt die verwendeten Polymer und in Tabelle 3 sind die dazugehörigen entsprechenden physikalischen Eigenschaften illustriert.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in einem üblichen Mischsaal. Aus sämtlichen Mischungen wurden Prüfkörper durch Vulkanisation hergestellt und mit diesen Prüfkörpern für die Kautschukindustrie typische Materialeigenschaften bestimmt. Zur Bestimmung der physikalischen Eigenschaften an Prüfkörpern wurden folgende Testverfahren angewandt:
- Mooney-Viskosität gemäß ASTM D1646
- Shore-A-Härte bei Raumtemperatur mittels Durometer gemäß DIN ISO 7619-1
- Spannungswert bei 10% und 100% Dehnung jeweils längs und quer bei Raumtemperatur gemäß DIN 53 504
- Zugfestigkeit bei Raumtemperatur jeweils längs und quer gemäß DIN 53 504
- Weiterreißfestigkeit nach Graves bei Raumtemperatur gemäß DIN 53 515 oder neu ISO 34-1
- Fa bzw. Fe aus Rheometer-Prüfung bei 180°C (20min) gemäß ASTM D5289 und ISO 6502

**Tabelle 1**

| **Bestandteile** | **Einheit** | **V1** | **V2** | **E1** | **E2** |
|---|---|---|---|---|---|
| Polymer 1 | phr | 60 | -- | -- | -- |
| Polymer 2 | phr | -- | 60 | -- | 45 |
| Polymer 3 | phr | -- | -- | 60 | 15 |
| Polymer 4 | phr | 40 | 40 | 40 | 40 |
| Fasern | phr | 5 | 5 | 5 | 5 |
| Kieselsäure (VN 3) | phr | 15 | 15 | 15 | 15 |
| Ruß (N550) | phr | 25 | 25 | 25 | 25 |
| Stearinsäure, Zinkoxid | phr | 6 | 6 | 6 | 6 |
| Vernetzer | phr | 13 | 13 | 13 | 13 |

HNBR: Zeoforte ZSC 2295
Fasern: Aramidfasern, 3mm Länge
Vernetzersystem: Naugard 445, Vulkanox ZMB 2, Perkadox 14-40 B

**Tabelle 2**

| | **Polymer 1** | **Polymer 2** | **Polymer 3** | **Polymer 4** |
|---|---|---|---|---|
| Typ | HNBR | HNBR | HNBR | HNBR |
| Handelsname | Therban 4307 | Zetpol 2001 | Zetpol 2001 EP | Zeoforte ZSC 2295 |
| ACN -Gehalt | 43 Gew.-% | 40 Gew.-% | 40 Gew. -% | 36 Gew.% |
| ML 1+4 (100°C) | 63 MU | 95 MU | 30 MU | 93 MU |

**Tabelle 3**

| **Phys. Eigenschaft** | **V1** | **V2** | **E1** | **E2** |
|---|---|---|---|---|
| Fa [dNm] | 1,10 | 1,77 | 0,59 | 1,05 |
| Fe [dNm] | 44,64 | 48,73 | 39,53 | 39,95 |
| Fe - Fa [dNm] | 43,54 | 46,96 | 38,94 | 38,90 |
| Mooney ML 1 + 4 (100°C) [MU] | 64 | 84 | 45 | 62 |
| Härte [Shore A] | 89 | 88 | 88 | 89 |
| Festigkeit (längs) [MPa] | 18,6 | 20,5 | 21,7 | 24,3 |
| Festigkeit (quer) [MPa] | 17,7 | 18,2 | 17,7 | 19,5 |
| Spannungswert 10% (längs) [MPa] | 7,7 | 8,8 | 8,3 | 12,1 |
| Spannungswert 10% (quer) [MPa] | 2,4 | 1,8 | 1,6 | 1,8 |
| Spannungswert 50% (längs) [MPa] | 16,8 | 16,5 | 14,9 | 16,5 |
| Spannungswert 50% (quer) [MPa] | 6,6 | 5,3 | 4,8 | 5,5 |
| Weiterreißfestigkeit (längs) [N/mm] | 14,3 | 16,5 | 14,2 | 24,6 |
| Weiterreißfestigkeit (quer) [N/mm] | 15,7 | 17,3 | 23,1 | 26,5 |

## Patentansprüche

1. Antriebsriemen mit einem elastischen Grundkörper, umfassend eine Decklage als Riemenrücken und einen Unterbau mit einer Kraftübertragungszone, wobei die Decklage und / oder der Unterbau aus wenigstens einer faserhaltigen Polymermischung besteht, **dadurch gekennzeichnet, dass** die Polymermischung wenigstens ein Copolymer aus Butadien und Acrylnitril mit einer Mooney-Viskosität [(ML 1+4), 100°C)] zwischen 10 und 50 und zusätzlich wenigstens ein weiteres Copolymer aus Butadien und Acrylnitril mit einer Mooney-Viskosität [(ML 1+4), 100°C)] größer oder gleich 60 enthält.

2. Antriebsriemen nach Anspruch 1, **dadurch gekennzeichnet, dass** das Copolymer aus Butadien und Acrylnitril mit einer Mooney-Viskosität [(ML 1+4), 100°C)] größer oder gleich 60 und das Copolymer aus Butadien und Acrylnitril mit einer Mooney-Viskosität [(ML 1+4), 100°C)] zwischen 10 und 50 eine identische Mikrostruktur besitzen.

3. Antriebsriemen nach Anspruch 1 oder 2, **dadurch gekennzeichnet, dass** das Copolymer aus Butadien und Acrylnitril mit einer Mooney-Viskosität [(ML 1+4), 100°C)] größer oder gleich 60 und das Copolymer aus Butadien und Acrylnitril mit einer Mooney-Viskosität [(ML 1+4), 100°C)] zwischen 10 und 50 jeweils ein teilhydrierter oder vollständig hydrierter Nitrilkautschuk (HNBR) ist.

4. Verfahren zur Herstellung eines Antriebsriemens nach einem der Ansprüche 1 bis 3, **dadurch gekennzeichnet, dass** die Fasern der faserhaltigen Polymermischung vor dem Einmischen in die Polymermischung mit wenigstens einem Copolymer aus Butadien und Acrylnitril mit einer Mooney-Viskosität [(ML 1+4), 100°C)] zwischen 10 und 50 zu einem Batch vermischt werden.

5. Verfahren nach Anspruch 4, **dadurch gekennzeichnet, dass** die Fasern aus Aramid, PBO, POD oder PVA bestehen.

6. Verfahren nach Anspruch 5, **dadurch gekennzeichnet, dass** die Fasern aus Aramid bestehen.

7. Verfahren nach einem der Ansprüche 4 bis 6, **dadurch gekennzeichnet, dass** das Mischen zu einem Batch auf einer Walze erfolgt.

## Claims

1. Drive belt having an elastic main body, comprising a top layer as a belt backing and a substructure having a power transmission zone, wherein the top layer and/or the substructure are made of at least one fibre-containing polymer mixture, **characterized in that** the polymer mixture contains at least one copolymer of butadiene and acrylonitrile having a Mooney viscosity [(ML 1+4), 100°C)] between 10 and 50 and additionally at least one further copolymer of butadiene and acrylonitrile having a Mooney viscosity [(ML 1+4), 100°C)] of not less than 60.

2. Drive belt according to Claim 1, **characterized in that** the copolymer of butadiene and acrylonitrile having a Mooney viscosity [(ML 1+4), 100°C)] of not less than 60 and the copolymer of butadiene and acrylonitrile having a Mooney viscosity [(ML 1+4), 100°C)] between 10 and 50 have an identical microstructure.

3. Drive belt according to Claim 1 or 2, **characterized in that** the copolymer of butadiene and acrylonitrile having a Mooney viscosity [(ML 1+4), 100°C)] of not less than 60 and the copolymer of butadiene and acrylonitrile having a Mooney viscosity [(ML 1+4), 100°C)] between 10 and 50 is in each case a partially hydrogenated or fully hydrogenated nitrile rubber (HNBR).

4. Process for producing a drive belt according to any of Claims 1 to 3, **characterized in that** the fibres of the fibre-containing polymer mixture are mixed with at least one copolymer of butadiene and acrylonitrile having a Mooney viscosity [(ML 1+4), 100°C)] between 10 and 50 to afford a batch before incorporation into the polymer mixture.

5. Process according to Claim 4, **characterized in that** the fibres are made of aramid, PBO, POD or PVA.

6. Process according to Claim 5, **characterized in that** the fibres are made of aramid.

7. Process according to any of Claims 4 to 6, **characterized in that** the mixing to afford a batch is carried out on a roller mill.

## Revendications

1. Courroie d'entraînement comprenant un corps de base élastique, comprenant une couche de recouvrement en tant que dos de la courroie et une sous-structure comprenant une zone de transmission de force, la couche de recouvrement et/ou la sous-structure étant constituées par au moins un mélange de polymères contenant des fibres, **caractérisée en ce que** le mélange de polymères contient au moins un copolymère de butadiène et d'acrylonitrile ayant une viscosité de Mooney [(ML 1+4), 100 °C] comprise entre 10 et 50 et contient en outre au moins un copolymère supplémentaire de butadiène et d'acrylonitrile ayant une viscosité de Mooney [(ML 1+4), 100 °C] supérieure ou égale à 60.

2. Courroie d'entraînement selon la revendication 1, **caractérisée en ce que** le copolymère de butadiène et d'acrylonitrile ayant une viscosité de Mooney [(ML 1+4), 100 °C] supérieure ou égale à 60 et le copolymère de butadiène et d'acrylonitrile ayant une viscosité de Mooney [(ML 1+4), 100 °C] comprise entre 10 et 50 présentent une microstructure identique.

3. Courroie d'entraînement selon la revendication 1 ou 2, **caractérisée en ce que** le copolymère de butadiène et d'acrylonitrile ayant une viscosité de Mooney [(ML 1+4), 100 °C] supérieure ou égale à 60 et le copolymère de butadiène et d'acrylonitrile ayant une viscosité de Mooney [(ML 1+4), 100 °C] comprise entre 10 et 50 sont chacun un caoutchouc de nitrile partiellement hydrogéné ou entièrement hydrogéné (HNBR).

4. Procédé de fabrication d'une courroie d'entraînement selon l'une quelconque des revendications 1 à 3, **caractérisé en ce que** les fibres du mélange de polymères contenant des fibres sont mélangées avant l'incorporation dans le mélange de polymères avec au moins un copolymère de butadiène et d'acrylonitrile ayant une viscosité de Mooney [(ML 1+4), 100 °C] comprise entre 10 et 50 pour former une charge.

5. Procédé selon la revendication 4, **caractérisé en ce que** les fibres sont constituées par de l'aramide, du PBO, du POD ou du PVA.

6. Procédé selon la revendication 5, **caractérisé en ce que** les fibres sont constituées par de l'aramide.

7. Procédé selon l'une quelconque des revendications 4 à 6, **caractérisé en ce que** le mélange pour former une charge a lieu sur un cylindre.
